# FASCICULE DE BREVET EUROPEEN

(11) **EP 2 582 637 B1**
(45) Date de publication et mention de la délivrance du brevet: **05.11.2014**
(21) Numéro de dépôt: 11729761.4
(22) Date de dépôt: 15.06.2011
(51) Int. Cl.: C03B 5/43, C04B 35/109, C04B 35/484, C04B 35/653, C04B 35/657

(54) **BLOC RÉFRACTAIRE ET FOUR DE VERRE**
FEUERFESTER BLOCK UND GLASSOFEN
REFRACTORY BLOCK AND GLASS FURNACE

(30) Priorité: 21.06.2010 FR 1054922
(43) Date de publication de la demande: 24.04.2013
(73) Titulaire: Saint-Gobain Centre de Recherches et d'Etudes Européen, 92400 Courbevoie (FR)
(72) Inventeur: GAUBIL, Michel, F-30133 Les Angles (FR); MASSARD, Ludovic, F-84170 Monteux (FR)
(74) Mandataire: Nony
(86) Numéro de dépôt international: PCT/IB2011/052597
(87) Numéro de publication internationale: WO 2011/161588

(56) Documents cités:
- WO-A1-03/074445
- WO-A1-2010/073195

## Description

### Domaine technique

L'invention concerne un produit réfractaire fondu AZS (Alumine-Zircone-Silice).

### Etat de la technique

Parmi les produits réfractaires, on distingue les produits fondus, bien connus pour la construction des fours de fusion du verre, et les produits frittés.

A la différence des produits frittés, les produits fondus comportent le plus souvent une phase vitreuse intergranulaire reliant des grains cristallisés. Les problèmes posés par les produits frittés et par les produits fondus, et les solutions techniques adoptées pour les résoudre, sont donc généralement différents. Une composition mise au point pour fabriquer un produit fritté n'est donc pas a priori utilisable telle quelle pour fabriquer un produit fondu, et réciproquement.

Les produits fondus, souvent appelés « électrofondus », sont obtenus par fusion d'un mélange de matières premières appropriées dans un four à arc électrique ou par toute autre technique adaptée à ces produits. Le bain de matière en fusion est ensuite coulé dans un moule puis le produit obtenu subit un cycle de refroidissement contrôlé.

Parmi les produits fondus, les produits électrofondus AZS, c'est-à-dire comportant majoritairement de l'alumine (Al₂O₃), de la zircone (ZrO₂) et de la silice (SiO₂), sont connus depuis plusieurs dizaines d'années. Le brevet US-A-2 438 552 décrit un des premiers perfectionnements apportés à ce type de produit. Les auteurs préconisent l'ajout de Na₂O (1-2,2%) et MgO/CaO (0,2-0,8%) pour répondre à des problèmes de faisabilité concernant des produits comportant moins de 70% d'Al₂O₃, de 14 à 40% ZrO₂ et de 9 à 12% de SiO₂.

EP 0 939 065 B1 propose de réduire le taux d'exsudation des produits AZS contenant 20 à 59% de zircone en ajoutant B₂O₃, P₂O₅ et au moins un des oxydes du groupe SnO₂, ZnO, CuO et MnO₂. L'ajout de ces oxydes, qui ne sont pas présents comme impuretés dans les matières premières classiques, conduit à un surcoût de fabrication et à d'éventuels problèmes de coloration.

FR 2 875 497 propose de réduire le taux d'exsudation des produits AZS en choisissant une analyse chimique telle que ZrO₂: 15,5 à 22 %, SiO₂ : 10,5 à 15 % et Na₂O+K₂O+Li₂O : 1,0 à 2,5 %, en particulier si le rapport en poids Al₂O₃ / ZrO₂ est supérieur ou égal à 2,9, et si le rapport en poids SiO₂ / (Na₂O+K₂O+Li₂O) est supérieur à 7 et/ou inférieur à 9.

La demande française de n° de dépôt FR 08 58914 ou la demande WO 2010/073195 proposent d'améliorer la résistance à la corrosion des produits AZS en ajoutant Y₂O₃ pour une analyse chimique telle que ZrO₂ : 30 à 46 %, SiO₂ : 10 à 16 % et Na₂O+K₂O : 0,5 à 4 %.

Dans tous les exemples selon l'invention de ces demandes (exemples 4 à 10), SiO₂/(Na₂O+K₂O+B₂O₃) < 5 × Y₂O₃. Au contraire, aucun des exemples qui respectent le critère SiO₂/(Na₂O+K₂O+B₂O₃) ≥ 5 × Y₂O₃, sauf l'exemple 11, n'est conforme à l'invention de ces demandes.

Les produits AZS commercialisés actuellement par Saint-Gobain SEFPRO, tels que l'ER-1681, l'ER-1685, ou l'ER-1711, contiennent de 45 à 50% d'Al₂O₃, de 32 à 41% de ZrO₂, de 12 à 16% de SiO₂ et environ 1% de Na₂O. L'ER-2001 SLX contient environ 68% d'Al₂O₃, 17% de ZrO₂, de 13% de SiO₂ et 1,7% de Na₂O.

Ces produits conviennent bien pour la fabrication des fours de verrerie. Plus particulièrement, les produits AZS actuels sont principalement utilisés pour les zones en contact avec le verre en fusion ainsi que pour la superstructure des fours de verrerie.

Ces produits sont performants mais il existe un besoin permanent pour améliorer les conditions de conduite des fours de verrerie ainsi que la qualité du verre.

En particulier, pour les blocs de produit fondu AZS constituant les cuves des fours de verrerie, il est important de limiter les problèmes d'exsudation aux températures de fonctionnement.

Il existe donc un besoin pour un produit fondu AZS présentant une bonne résistance à la corrosion par le verre en fusion et ne présentant pas de problème d'exsudation aux températures de fonctionnement des cuves de four de verrerie.

La présente invention vise à satisfaire ce besoin.

### Résumé de l'invention

Plus particulièrement, elle concerne un produit réfractaire fondu ayant la composition chimique moyenne suivante, en % en masse sur la base des oxydes et pour un total de 100% :
ZrO₂ : 30 - 50% ;
SiO₂ : 8 - 16% ;
Al₂O₃ : complément à 100% ;
Y₂O₃ ≥ 50/ZrO₂ et Y₂O₃ ≤ 5% ;
Na₂O+K₂O+B₂O₃ ≥ 0,2 % et SiO₂/(Na₂O+K₂O+B₂O₃) ≥ 5 x Y₂O₃ ;
CaO : ≤ 0,5% ;
Autres espèces oxydes : ≤ 1,5%.

Comme on le verra plus en détail dans la suite de la description, un tel produit présente une bonne résistance à la corrosion par le verre en fusion et ne présente pas de problème d'exsudation aux températures de fonctionnement des cuves de four de verrerie.

Un produit selon l'invention peut encore comporter une ou plusieurs des caractéristiques optionnelles suivantes :
- ZrO₂ ≥ 32%, voire ZrO₂ ≥ 35%, et/ou ZrO₂ ≤ 45%, voire ZrO₂ ≤ 42% ;
- SiO₂ ≥ 10%, voire SiO₂ ≥ 11% et/ou SiO₂ ≤ 15% ;
- Al₂O₃ ≥ 38%, voire Al₂O₃ ≥ 40% et/ou Al₂O₃ ≤ 52%, voire Al₂O₃ ≤ 50% ;
- La teneur en Y₂O₃ est supérieure à 60/ZrO₂, voire supérieure à 70/ZrO₂ ;
- La teneur en Y₂O₃ est supérieure ou égale à 1,2%, voire supérieure ou égale à 1,5 %, voire supérieure ou égale à 2,0% , ou supérieure ou égale à 2,5%, ou supérieure ou égale à 2,7% ;
- La teneur en Y₂O₃ est inférieure ou égale à 4,5%, voire inférieure ou égale à 4,0%;
- La teneur en Na₂O + K₂O + B₂O₃ est supérieure à 0,3%, supérieure à 0,4%, voire supérieure à 0,5% et/ou inférieure à 4,0%, inférieure à 3,0%, inférieure à 2,5%, inférieure à 2,0%, inférieure à 1,5%, voire inférieure à 1,2%, voire inférieure à 1,1%, voire inférieure à 1,0%, inférieure à 0,9%, inférieure à 0,8%;
- La teneur en Na₂O est supérieure à 0,3%, supérieure à 0,4%, voire supérieure à 0,5%, et/ou inférieure à 4,0%, inférieure à 3,0 %, inférieure à 2,5%, inférieure à 2,0 %, inférieure à 1,5%, voire inférieure à 1,2%, voire inférieure à 1,1%, voire inférieure à 1,0%, inférieure à 0,9%, inférieure à 0,8%;
- Le rapport en poids SiO₂ / Na₂O est supérieur à 5,3 x Y₂O₃, voire supérieur à 5,5 x Y₂O₃, voire supérieur à 5,7 x Y₂O₃, voire supérieur à 6 x Y₂O₃ ;
- Le rapport en poids SiO₂ / Na₂O est supérieur à 11, voire supérieur à 12, voire supérieur à 13, voire supérieur à 14, voire supérieur à 15 ;
- Les « autres espèces oxydes » sont des impuretés ;
- Le produit se présente sous la forme d'un bloc.

Dans un mode de réalisation préféré,
ZrO₂ : 32 - 45% ; et
SiO₂ : 10 - 15% ; et
Al₂O₃ : 40 - 50% ; et
Y₂O₃ : 2,2 - 4,0% ; et
Na₂O : 0,4 - 1,2%.

L'invention concerne aussi un procédé de fabrication d'un produit réfractaire selon l'invention, comprenant les étapes successives suivantes :
a) mélange de matières premières, de manière à former une charge de départ,
b) fusion de ladite charge de départ jusqu'à obtention d'un bain de matière en fusion,
c) coulage et solidification de ladite matière en fusion, par refroidissement contrôlé, de manière à obtenir un produit réfractaire fondu,
ce procédé étant remarquable en ce que lesdites matières premières sont choisies de manière que ledit produit réfractaire fondu présente une composition conforme à celle d'un produit selon l'invention.

L'invention concerne enfin un four de fusion de verre comportant un produit selon l'invention, notamment un produit fabriqué ou susceptible d'être fabriqué par un procédé selon l'invention, en particulier dans une région du four dans laquelle le produit est susceptible d'entrer en contact avec du verre en fusion ou avec des gaz dégagés par la fusion du verre, et notamment en superstructure (voûte).

### Définitions

De manière générale, on appelle « produit fondu », « produit fondu et coulé » ou « obtenu par fusion » un produit solide, éventuellement recuit, obtenu par solidification complète, par refroidissement, d'un bain de matière en fusion. Un « bain de matière en fusion » est une masse qui, pour conserver sa forme, doit être contenue dans un récipient. Un bain de matière en fusion, apparemment liquide, peut contenir des parties solides, mais en quantité insuffisante pour qu'elles puissent structurer ladite masse.

Un produit selon l'invention peut contenir de l'oxyde d'hafnium, HfO₂, naturellement présent dans les sources de zircone. Sa teneur massique dans le produit selon l'invention est inférieure ou égale à 5%, généralement inférieure ou égale à 2%. Par « ZrO₂ », on désigne classiquement la zircone et ces traces d'oxyde d'hafnium. HfO₂ n'est donc pas compris dans les "autres espèces oxydes".

Par « impuretés », on entend les constituants inévitables, introduits nécessairement avec les matières premières ou résultant de réactions avec ces constituants. En particulier, les oxydes de fer et de titane sont connus pour être néfastes et leur teneur doit être limitée à des traces introduites à titre d'impuretés avec les matières premières. De préférence, la quantité massique de Fe₂O₃ + TiO₂ est inférieure à 0,55 %.

Dans les formules comprenant un rapport (sans unité) entre des pourcentages massiques de constituants, par exemple SiO₂/(Na₂O+K₂O+B₂O₃) et une teneur (en pourcentage massique) en un autre constituant, par exemple 5 × Y₂O₃, la relation est purement mathématique afin de délimiter un domaine de compositions. Il en est de même pour les formules comprenant l'inverse d'une teneur (50/ZrO₂) et une teneur (Y₂O₃).

Sauf mention contraire, tous les pourcentages de la présente description sont des pourcentages massiques sur la base des oxydes.

### Description détaillée

Un produit selon l'invention peut être fabriqué suivant les étapes a) à c) décrites ci-dessous :
a) mélange de matières premières de manière à former une charge de départ,
b) fusion de ladite charge de départ jusqu'à obtention d'un bain de matière en fusion,
c) coulage et solidification dudit bain de matière en fusion, par refroidissement contrôlé de manière à obtenir un produit réfractaire selon l'invention.

A l'étape a), les matières premières sont déterminées de manière à garantir une composition, dans le produit fini, conforme à l'invention.

La présence d'oxyde d'yttrium est nécessaire dans les produits de l'invention mais sa teneur ne doit pas dépasser 5% sinon la faisabilité est dégradée.

Une teneur en Y₂O₃ supérieure ou égale à 50/ZrO₂ est nécessaire pour obtenir une bonne résistance à la corrosion par le verre en fusion.

La présence d'oxyde de sodium et/ou de potassium et/ou de bore est nécessaire pour conférer à la phase vitreuse des propriétés physiques et chimiques adaptées. La teneur en Na₂O+K₂O+B₂O₃ ne doit cependant pas dépasser une valeur telle que SiO₂/(Na₂O+K₂O+B₂O₃) ≥ 5 x Y₂O₃ sinon, aux températures de fonctionnement du four de fusion du verre, la phase vitreuse risque de s'écouler à la surface du produit qui perdrait ainsi sa cohésion et sa résistance à la corrosion. Dans un mode de réalisation K₂O et/ou B₂O₃ ne sont présents qu'à titre d'impuretés.

La présence d'oxyde de calcium est néfaste dans les produits de l'invention car elle est susceptible de générer des cristaux d'aluminate de chaux dans la phase vitreuse. La présence de ces cristaux peut entraîner des défauts de fracturation du produit. Par ailleurs, une teneur trop importante en CaO conduit à une dissolution des cristaux de zircone, ce qui diminue la résistance à la corrosion du produit. La teneur de CaO ne doit donc pas dépasser 0,5%.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement, on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes.

A l'étape c), le bain de matière en fusion est de préférence coulé dans un moule adapté pour la fabrication d'un bloc. Le refroidissement est de préférence effectué à la vitesse d'environ 10°C par heure.

Tout procédé conventionnel de fabrication de produits fondus AZS destinés à des applications dans des fours de fusion de verre peut être mis en oeuvre, pourvu que la composition de la charge de départ permette d'obtenir des produits présentant une composition conforme à celle d'un produit selon l'invention.

Un produit selon l'invention peut constituer tout ou partie d'un bloc.

Le bloc peut notamment présenter une masse de plus de 10 kg, de plus de 20 kg, voire de plus de 50 kg, de plus de 150 kg, de plus de 300 kg, voire de plus de 900 kg et/ou de moins de 2 tonnes. En particulier, il peut présenter une masse d'environ 1 tonne.

La forme du bloc n'est pas limitative.

Le bloc peut présenter au moins une dimension, (épaisseur, longueur, ou largeur) d'au moins 150 mm, de préférence d'au moins 200 mm, voire d'au moins 400 mm, voire d'au moins 600 mm, voire d'au moins 800 mm ou même d'au moins 1000 mm, voire encore d'au moins 1600 mm.

Dans un mode de réalisation avantageux, l'épaisseur, la longueur et la largeur du bloc sont d'au moins 150 mm, voire d'au moins 200 mm, voire d'au moins 300 mm, voire d'au moins 400 mm.

Un produit selon l'invention peut être également utilisé sous la forme d'un produit mince, c'est-à-dire présentant une épaisseur comprise entre de 50 à 150 mm, en particulier une épaisseur inférieure à 120 mm, voire inférieure à 100 mm. Il peut notamment se présenter sous la forme d'une dalle.

De préférence, le bloc ou la dalle fait partie ou constitue une paroi ou la sole d'un four, en particulier d'un four de fusion de verre.

### Exemples

Les exemples non limitatifs suivants sont donnés dans le but d'illustrer l'invention.

Dans ces exemples, on a employé les matières premières suivantes :
- la zircone CC10 vendue par la Société Européenne des Produits Réfractaires contenant principalement en moyenne, en poids, 98,5% de ZrO₂, 0,5% de SiO₂ et 0,2% de Na₂O,
- le sable de zircon à 33% de silice,
- l'alumine de type AC44 vendue par la société Pechiney et contenant en moyenne 99,4% d'Al₂O₃,
- le carbonate de sodium contenant 58,5% de Na₂O,
- l'oxyde d'yttrium de pureté supérieure à 99%.

Les produits ont été préparés selon le procédé classique de fusion en four à arc, puis coulés pour obtenir des blocs de format 200x400x150 mm³.

L'analyse chimique des produits obtenus est donnée dans le tableau 1 ; il s'agit d'une analyse chimique moyenne, donnée en pourcentage en masse. L'exemple 9 comporte en outre 2,1% en poids d'oxyde de bore (B₂O₃) ; l'alumine Al₂O₃ et les impuretés constituent le complément à 100%. Pour les autres exemples, l'alumine Al₂O₃ et les impuretés constituent le complément à 100%.

### Evaluation de la résistance à l'exsudation (Test A)

Des échantillons des blocs préparés sont prélevés sous la forme de cylindres d'une longueur de 100 mm et d'un diamètre de 24 mm, puis sont soumis à une montée en température jusqu'à 1550°C. On observe le comportement de l'échantillon grâce à une camera et on relève la température correspondant au début d'écoulement de la phase vitreuse à la surface de l'échantillon. Cette température est indiquée en °C dans le tableau 1.

**Tableau 1**

| Exemple | ZrO₂ | SiO₂ | Na₂O | Y₂O₃ | 50/ZrO₂ | SiO₂ / (Na₂O+B₂O₃) | 5 x Y₂O₃ | Test A (°C) |
|---|---|---|---|---|---|---|---|---|
| 1 | **36,0** | **14,0** | **1,40** | **0,06** | **1,39** | **10,0** | **0,3** | **1450** |
| 2 | **36,0** | **14,0** | **1,40** | **3,00** | **1,39** | **10,0** | **15,0** | **1350** |
| 3 | **35,6** | **14,0** | **1,09** | **3,21** | **1,40** | **12,8** | **16,1** | **1400** |
| 4 | **36,0** | **12,2** | **0,80** | **2,98** | **1,39** | **15,3** | **14,9** | **1440** |
| 5 | **35,6** | **14,0** | **0,72** | **3,28** | **1,40** | **19,4** | **16,4** | **1440** |
| 6 | **39,9** | **11,6** | **0,41** | **2,72** | **1,25** | **28,3** | **13,6** | **1450** |
| 7 | **39,6** | **12,0** | **0,41** | **2,88** | **1,26** | **29,3** | **14,4** | **1450** |
| 8 | **36,6** | **12,7** | **0,92** | **3,10** | **1,37** | **13,8** | **15,5** | **1380** |
| 9 | **40,2** | **12,3** | **0,13** | **2,88** | **1,24** | **5,5** | **14,4** | **1365** |
| 10 | **36,0** | **12,9** | **0,30** | **3,30** | **1,39** | **43,0** | **16,5** | **1470** |
| 11 | **36,0** | **14,5** | **0,91** | **2,98** | **1,39** | **15,9** | **14,9** | **1440** |
| 12 | **40,2** | **14,0** | **0,89** | **1,50** | **1,24** | **15,7** | **7,5** | **1420** |

Les exemples 4 à 7 de l'invention montrent bien, en comparaison des exemples 1 à 3, le rôle du rapport en poids entre SiO₂ et (Na₂O+B₂O₃). En effet, lorsque ce rapport devient supérieur à 5 fois la teneur en oxyde d'yttrium, on augmente sensiblement la température de début d'écoulement de la phase vitreuse à la surface de l'échantillon.

Une comparaison de l'exemple 8 avec l'exemple 10, l'exemple 11 ou l'exemple 4 montre une chute de cette température dès que ce rapport devient inférieur à 5 fois la teneur en oxyde d'yttrium.

Une comparaison de l'exemple 9 avec l'exemple 7, ou avec l'exemple 6, illustre également l'effet de ce rapport sur cette température.

L'exemple 1 présente une température au test A très satisfaisante, mais une résistance à la corrosion inférieure à celle des produits de l'invention.

Bien entendu, la présente invention n'est pas limitée aux modes de réalisation décrits fournis à titre d'exemples illustratifs et non limitatifs.

En particulier, les produits selon l'invention ne se limitent pas à des formes ou de dimensions particulières, ni à l'application à des fours de verrerie.

## Revendications

1. Produit réfractaire fondu ayant la composition chimique moyenne suivante, en % en masse sur la base des oxydes et pour un total de 100% :
ZrO₂ : 30 - 50% ;
SiO₂ : 8 - 16% ;
Al₂O₃ : complément à 100% ;
Y₂O₃ ≥ 50/ZrO₂ et Y₂O_{3 ≤} 5%,
Na₂O+K₂O+B₂O₃ ≥ 0,2 % et SiO₂/(Na₂O+K₂O+B₂O₃) ≥ 5 x Y₂O₃ ;
CaO : ≤ 0,5% ;
Autres espèces oxydes : ≤ 1,5%.

2. Produit selon la revendication précédente, dans lequel la teneur en oxyde d'yttrium est supérieure au rapport 60/ ZrO₂.

3. Produit selon l'une quelconque des revendications précédentes, dans lequel la teneur en oxyde d'yttrium est supérieure au rapport 70/ ZrO₂.

4. Produit selon l'une quelconque des revendications précédentes, dans lequel la teneur totale en oxydes alcalins Na₂O+K₂O+B₂O₃ est inférieure à 1,5%.

5. Produit selon la revendication 4, dans lequel la teneur totale en oxydes alcalins Na₂O+K₂O+B₂O₃ est inférieure à 1,1%.

6. Produit selon l'une quelconque des revendications précédentes, dans lequel SiO₂/ Na₂O
≥ 5,5 x Y₂O₃.

7. Produit selon l'une quelconque des revendications précédentes, dans lequel le rapport en poids SiO₂/ Na₂O est supérieur à 12.

8. Produit selon l'une quelconque des revendications précédentes, dans lequel la teneur en zircone est supérieure à 32% et/ou la teneur en silice est supérieure à 10% et/ou la teneur en alumine est supérieure à 38% et/ou la teneur en oxyde d'yttrium est supérieure à 2,0% et/ou la teneur totale en oxydes alcalins Na₂O+K₂O+B₂O₃ est supérieure à 0,3%.

9. Produit selon l'une quelconque des revendications précédentes, dans lequel la teneur en zircone est inférieure à 45% et/ou la teneur en silice est inférieure à 15% et/ou la teneur en alumine est inférieure à 52% et/ou la teneur en oxyde d'yttrium est inférieure à 4,5% et/ou la teneur en oxydes alcalins Na₂O+K₂O+B₂O₃ est inférieure à 1,2%.

10. Produit selon l'une quelconque des revendications précédentes, dans lequel :
ZrO₂ : 32 - 45% ; et
SiO₂ : 10 - 15% ; et
Al₂O₃ : 40 - 50% ; et
Y₂O₃ : 2,2 - 4,0% ; et
Na₂O : 0,4 - 1,2%.

11. Produit selon l'une quelconque des revendications précédentes, se présentant sous la forme d'un bloc présentant une masse de plus de 10 kg.

12. Four de fusion de verre, comportant un produit selon l'une quelconque des revendications précédentes.

13. Four selon la revendication précédente, dans lequel ledit produit est disposé dans une région du four dans lequel il est susceptible d'entrer en contact avec du verre en fusion ou avec des gaz dégagés par la fusion du verre.

## Patentansprüche

1. Geschmolzenes Feuerfestprodukt, welches folgende mittlere chemische Zusammensetzung folgendermaßen aufweist und zwar in Massenprozent auf der Basis von Oxyden und für eine Gesamtheit von 100%:
ZrO₂: 30 - 50%;
SiO₂: 8 - 16%;
Al₂O₃: vervollständigt zu 100%;
Y₂O₃ ≥50/ZrO₂ und Y₂O₃≤5%,
Na₂O+K₂O+B₂O+B₂O₃≥0,2% und SiO₂/ (Na₂O+K₂O+B₂O₃)≥5 x Y₂O₃;
CaO : ≤ 0,5%;
andere Arten von Oxyden: ≤ 1,5%.

2. Produkt nach dem vorhergehenden Anspruch, in welchem der Gehalt an Yttriumoxyd größer als das Verhältnis 60/ZrO₂ ist.

3. Produkt nach einem der vorhergehenden Ansprüche, in welchem der Gehalt an Yttriumoxyd größer als das Verhältnis 70/ZrO₂ ist.

4. Produkt nach einem der vorhergehenden Ansprüche, in dem Gesamtgehalt an alkalischen Oxyden Na₂O+K₂O+B₂O₃ kleiner als 1,5% ist.

5. Produkt nach einem der vorhergehenden Ansprüche, in dem Gesamtgehalt an alkalischen Oxyden Na₂O+K₂O+B₂O₃ kleiner als 1,1% ist.

6. Produkt nach einem der vorhergehenden Ansprüche, in welchem SiO₂/Na₂O ≥ 5,5 x Y₂O₃ ist.

7. Produkt nach einem der vorhergehenden Ansprüche, in welchem das Gewichtsverhältnis SiO₂/Na₂O größer als 12 ist.

8. Produkt nach einem der vorhergehenden Ansprüche, in welchem der Gehalt an Zirkonoxyd größer als 32% ist und/oder der Gehalt an Siliziumoxyd größer als 10% und/oder der Gehalt an Aluminiumoxyd größer als 38% und/oder der Gehalt an Yttriumoxyd größer als 2.0% und/oder der Gesamtgehalt an alkalischen Oxyden Na₂O+K₂O+B₂O₃ größer als 0,3% ist.

9. Produkt nach einem der vorhergehenden Ansprüche, in welchem der Gehalt an Zirkonoxyd kleiner als 45% ist und/oder der Gehalt an Siliziumoxyd kleiner als 15% und/oder der Gehalt an Aluminiumoxyd kleiner als 52% und/oder der Gehalt an Yttriumoxyd kleiner als 4,5% und/oder der Gehalt an alkalischen Oxyden Na₂O+K₂O+B₂O₃ kleiner als 1,2% ist.

10. Produkt nach einem der vorhergehenden Ansprüche, in welchem :
ZrO₂: 32 - 45%; und
SiO₂: 10 - 15%; und
Al₂O₃: 40 - 50%%; und
Y₂O₃: 2,2 - 4,0%; und
Na₂O: 0,4 - 1,2%.

11. Produkt nach einem der vorhergehenden Ansprüche, welches sich in
Form eines Blocks darstellt mit einer Masse von mehr als 10 kg.

12. Glasschmelzofen, welcher ein Produkt nach einem der vorhergehenden
Ansprüche aufweist.

13. Ofen nach dem vorhergehenden Anspruch, in welchem das Produkt in
einer Region des Ofens angeordnet ist, welcher geeignet ist in Kontakt mit Glas in Schmelze oder mit während der Glasschmelze freigesetztem Gas zu gelangen.

## Claims

1. Fused refractory product comprising the following chemical composition, as a percentage by weight, based on the oxides and for a total of 100%:
ZrO₂: 30 - 50%;
SiO₂: 8 - 16%;
Al₂O₃: complement to 100%;
Y₂O₃ ≥ 50/ZrO₂ and Y₂O₃ ≤ 5%;
Na₂O+K₂O+B₂O₃ ≥ 0.2% and SiO₂/(Na₂O+K₂O+B₂O₃) ≥ 5 * Y₂O₃ ;
CaO: ≤ 0.5%;
Other oxide species: ≤ 1.5%.

2. Product according to the preceding claim, in which the yttrium oxide content is higher than the ratio 60/ZrO₂.

3. Product according to either of the preceding claims, in which the yttrium oxide content is higher than the ratio 70/ZrO₂.

4. Product according to any one of the preceding claims, in which the total content of alkaline oxides Na₂O+K₂O+B₂O₃ is lower than 1.5%.

5. Product according to Claim 4, in which the total content of alkaline oxides Na₂O+K₂O+B₂O₃ is lower than 1.1%.

6. Product according to any one of the preceding claims, in which SiO₂/Na₂O ≥ 5.5 * Y₂O₃.

7. Product according to any one of the preceding claims, in which the SiO₂/Na₂O weight ratio is higher than 12.

8. Product according to any one of the preceding claims, in which the zirconia content is higher than 32% and/or the silica content is higher than 10% and/or the alumina content is higher than 38% and/or the yttrium oxide content is higher than 2.0% and/or the total content of alkaline oxides Na₂O+K₂O+B₂O₃ is higher than 0.3%.

9. Product according to any one of the preceding claims, in which the zirconia content is lower than 45% and/or the silica content is lower than 15% and/or the alumina content is lower than 52% and/or the yttrium oxide content is lower than 4.5% and/or the content of alkaline oxides Na₂O+K₂O+B₂O₃ is lower than 1.2%.

10. Product according to any one of the preceding claims, in which:
ZrO₂: 32 - 45%; and
SiO₂: 10 - 15%; and
Al₂O₃ : 40 - 50%; and
Y₂O₃ : 2.2 - 4.0%; and
Na₂O: 0.4 - 1.2%.

11. Product according to any one of the preceding claims, in the form of a block having a mass of over 10 kg.

12. Glass furnace, comprising a product according to any one of the preceding claims.

13. Furnace according to the preceding claim, in which the said product is placed in a zone of the furnace in which it is liable to enter into contact with a glass melt or with gases liberated by the melting of the glass.
